# FASCICULE DE BREVET EUROPEEN

(11) **EP 3 295 062 B1**
(45) Date de publication et mention de la délivrance du brevet: **09.02.2022**
(21) Numéro de dépôt: 16727763.1
(22) Date de dépôt: 12.05.2016
(51) Int. Cl.: F17C 13/04, F16K 1/30

(54) **ROBINET DE BOUTEILLE DE GAZ**
GASZYLINDERVENTIL
GAS CYLINDER VALVE

(30) Priorité: 12.05.2015 FR 1554221
(43) Date de publication de la demande: 21.03.2018
(73) Titulaire: Senior Aerospace Ermeto SAS, 41330 Fosse (FR)
(72) Inventeur: ROCHEREAU, Didier, 40210 Neung sur Beuvron (FR); BAR, Dimitri, 41700 Cour Cheverny (FR)
(74) Mandataire: Cabinet HERRBURGER
(86) Numéro de dépôt international: PCT/FR2016/051127
(87) Numéro de publication internationale: WO 2016/181082

(56) Documents cités:
- EP-A1- 0 386 740
- US-A- 5 063 976
- US-A- 5 063 976
- US-A1- 2006 273 275

## Description

### Domaine de l'invention

La présente invention se rapporte à un robinet de bouteille de gaz comportant un corps se fixant sur la bouteille de gaz, traversé axialement par un passage se terminant par un siège d'étanchéité débouchant dans une chambre et commandé par l'élément d'obturation d'un piston manœuvré par une poignée, un ajutage de sortie communiquant avec la chambre et recevant un clapet s'ouvrant dans le sens de la sortie du gaz sous l'effet de la pression du gaz arrivant dans la chambre après l'ouverture du passage par l'élément d'obturation.

### Etat de la technique

Il existe déjà un tel robinet de bouteille de gaz sous de multiples formes de réalisation. L'ajutage de sortie de tels robinets de bouteille de gaz est équipé d'un clapet se fermant dans le sens entrant, c'est-à-dire en allant de l'extérieur vers la chambre du robinet pour interdire le remplissage frauduleux de la bouteille. Ce clapet s'ouvre dans le sens de la distribution lorsque le robinet est ouvert. En général, un tuyau à gaz est vissé sur l'extrémité de l'ajutage pour faire la liaison avec l'équipement alimenté par la bouteille de gaz.

Pour remplir la bouteille à travers cet ajutage de sortie, le distributeur de gaz a la possibilité d'utiliser un outillage spécifique pour le remplissage (étrier de chargement) afin de rétracter le clapet pour libérer le passage dans le sens entrant. Mais cette solution a l'inconvénient de n'offrir qu'un passage de section limitée, ce qui ralentit l'opération de remplissage.

il existe également des robinets de bouteille de gaz équipés d'un ajutage spécialement réservé au remplissage. Mais ces robinets ont une forme plus complexe de sorte qu'il est en général préférable, du point de vue économique, d'utiliser des robinets dont l'ajutage de distribution peut s'utiliser également pour le remplissage.

On connaît selon le document US 2006/0273275 A1 un robinet de bouteille de gaz 100 comportant un corps 101 traversé axialement par un passage 112 se terminant par un siège d'étanchéité 28 débouchant dans une chambre. Ce siège d'étanchéité est commandé par un élément d'obturation 26 manœuvré par une poignée 27. Son ajutage de sortie 102 communique avec cette chambre et reçoit un clapet antiretour 110 s'ouvrant dans le sens de sortie du gaz sous l'effet de la pression arrivant dans la chambre après l'ouverture du passage 112 par l'élément d'obturation. Le clapet antiretour 110 est formé d'un manchon fileté, lissé dans l'ajutage de sortie 102 ; il a une prise d'outil 112 en aval de l'organe d'obturation 118 en forme de bille retenue dans le manchon par un joint 122 logé dans l'extrémité amont du manchon fileté.

Le joint 122 est muni d'un passage filtrant 124. Le clapet antiretour 110 est destiné à une installation de distribution de gaz a une fonction de filtre pour retenir d'éventuelles particules entraînées par le flux de gaz.

Du fait même de sa destination, il n'y a pas de protection du clapet contre un usage frauduleux puisque sa prise d'outil 112 débouche de façon accessible à un tournevis et qu'il suffirait d'engager une tige à travers l'orifice central 113 pour expulser très facilement le joint retenant la bille 118 et déboucher ainsi ce clapet antiretour pour pouvoir librement remplir la bouteille à travers le manchon 110.

### But de l'invention

La présente invention a pour but de réaliser un robinet de bouteille de gaz remédiant aux inconvénients des robinets connus et permettant un remplissage rapide de la bouteille de gaz à travers l'ajutage de distribution tout en conservant la sécurité réalisée par le clapet pour interdire tout remplissage frauduleux par le démontage non autorisé du bouchon à clapet.

### Exposé et avantages de l'invention

A cet effet, la présente invention a pour objet un robinet de bouteille de gaz tel que défini par la revendication 1.

Le robinet selon l'invention permet un remplissage très rapide de la bouteille de gaz en utilisant l'ajutage et après avoir démonté le bouchon à clapet. Une fois le remplissage terminé et le robinet fermé, on réinstalle le bouchon à clapet.

La fixation du bouchon à clapet étant protégé par un moyen mécanique n'autorisant l'accès à cette fixation qu'avec un outil particulièrement adapté, le réservoir est protégé contre tout démontage du robinet et le remplissage frauduleux du réservoir.

Cette forme de réalisation du manchon et de l'ajutage constitue une solution très simple assurant à la fois la tenue du bouchon à clapet et l'étanchéité de ce montage dans l'ajutage.

Suivant une autre caractéristique avantageuse, le moyen de protection de la fixation du manchon vissé dans l'ajutage est constitué par une prise d'outil pour visser / dévisser le bouchon de l'ajutage de sortie dans le manchon en aval du clapet, cette prise d'outil se terminant en amont du port extérieur et au-delà du filetage, l'ajutage comporte une gorge d'accrochage pour le bord d'un anneau de sécurité couvrant le bord extérieur du manchon après mise en place du bouchon dans l'ajutage.

Cette gorge d'accrochage permet de mettre en place pardessus le bord extérieur du bouchon, un anneau de sécurité qui constitue un témoin d'inviolabilité permettant de constater très simplement, à la vue, de la qualité du remplissage de la bouteille de gaz et de voir que ce remplissage a été fait dans les conditions régulières.

Cet anneau de sécurité ne gêne pas le démontage du bouchon à clapet puisqu'il suffit de détruire cet anneau de sécurité pour accéder au bouchon et le démonter. Après le remontage du bouchon, le fabricant met en place un nouvel anneau de sécurité.

Suivant une autre caractéristique avantageuse, le manchon comporte intérieurement et dans le sens amont-aval, suivant l'axe, un siège d'étanchéité rejoignant par son retour, la surface intérieure du manchon logeant un anneau de guidage bloqué dans le manchon en amont des logements de prise d'outil. Le clapet a un corps en forme de manchon fermé côté amont par un fond muni d'une gorge périphérique logeant un joint d'étanchéité pour coopérer avec le siège d'étanchéité du manchon, la gorge étant bordée, côté aval, par une collerette de butée et se poursuivant par une surface de guidage engagée dans l'anneau de guidage, le clapet étant muni, sur le côté extérieur du corps, d'un ressort de rappel comprimé entre la collerette et l'anneau de guidage pour pousser le clapet en appui contre le siège d'étanchéité. Cette structure du bouchon à clapet est extrêmement simple et garantit le bon fonctionnement du clapet comme clapet anti-remplissage tout en ne gênant pas la distribution du gaz.

Suivant une autre caractéristique, le fond a un bord périphérique, cylindrique, circulaire, venant dans l'entrée amont, cylindrique, circulaire, du siège d'étanchéité pour stabiliser le clapet par rapport à l'axe en position de fermeture. Cette coopération entre le bord périphérique du fond du clapet et l'entrée cylindrique circulaire en amont du siège d'étanchéité garantit le bon fonctionnement du clapet et son appui régulier contre le siège d'étanchéité.

Suivant une autre caractéristique avantageuse, la surface extérieure du corps du clapet forme un épaulement en amont de la surface de guidage pour limiter la position d'ouverture du clapet et l'écrasement du ressort de rappel, l'épaulement venant en appui contre l'anneau de guidage, poussé par le gaz sortant.

Le montage/démontage du bouchon à clapet est particulièrement simple selon l'invention par la coopération d'un outil et du manchon du bouchon à clapet par une liaison de type baïonnette.

En effet, selon l'invention, les prises d'outil sont des logements allongés dans la direction périphérique du manchon en amont du bord extérieur et débouchant par une entrée dans le bord, les logements traversant la paroi ayant deux extrémités périphériques de part et d'autre de leur entrée, et l'outil de montage/démontage du bouchon dans l'ajutage se compose d'une tige portant une poignée et à son autre extrémité, une partie cylindrique circulaire pour se loger dans l'entrée, côté avant du manchon, et portant des ergots répartis en périphérie selon la répartition des entrées des logements pour s'engager à travers ceux-ci dans les logements et permettre de visser/dévisser le bouchon dans le filetage de l'ajutage. La forme avantageuse permet le maintien du bouchon à clapet lors de l'opération de pose du bouchon à clapet.

Suivant une autre caractéristique avantageuse, le moyen de protection de la fixation du bouchon est composé :
- d'une gorge intérieure derrière l'entrée de l'ajutage et avant son filetage intérieur, et
- d'un bouchon dont l'entrée du manchon est munie d'au moins une prise d'outil formée d'une dent, d'une rampe et d'un creux de verrouillage, orientés sensiblement dans la direction axiale du bouchon ainsi que
- d'un outil muni d'une tête de forme complémentaire à celle de l'entrée du manchon avec sa ou ses prises d'outil pour s'engager dans la ou les prises d'outil et visser/dévisser le manchon dont le filetage extérieur coopère avec le filetage intérieur de l'ajutage.

Dans le cas de ce moyen de protection de la fixation du bouchon, le manchon comporte avantageusement au moins deux prises d'outil orientées dans le même sens de rotation de l'outil ou dans le sens opposé.

Dans les deux cas, cela complique considérablement toute intervention frauduleuse.

Suivant une caractéristique avantageuse, ce moyen de protection comporte un anneau de sécurité pour couvrir la face de l'entrée du manchon et la ou les prises d'outil et dont le bord est accroché de manière indémontable dans la gorge de l'ajutage.

L'invention a également pour objet un autre moyen de protection de la fixation du bouchon qui comprend :
- un ajutage ayant une entrée évasée se poursuivant par un alésage lisse muni d'une rainure d'accrochage et d'un épaulement servant de butée au bouchon,
- le bouchon étant lisse extérieurement avec une couronne munie d'un bord de butée et d'une gorge délimitée par une partie arrière, la gorge étant, à l'état installé du manchon, dans une position en regard de la rainure d'accrochage,
- un anneau élastique logé sous tension dans la gorge en dépassant à l'état monté et déformable pour être enfoncé dans cette gorge pour l'installation du bouchon dans l'ajutage jusqu'à ce que l'anneau puisse se détendre dans la rainure d'accrochage tout en restant aussi engagé dans la gorge,
- intérieurement, le manchon a un filetage d'entrée suivi d'un filetage de fond séparé du filetage d'entrée par une gorge dans le plan de la gorge pour séparer la partie arrière du restant du manchon et constituer une partie détachable par rupture pour libérer l'anneau,
- un outil avec une extrémité avant filetée qui, pour le démontage, se visse successivement dans le filetage d'entrée pour le rompre et dégager l'anneau pour ensuite se visser dans le filetage de fond et extraire le manchon et le restant du bouchon.

Dans le cas de ce moyen de protection, il est particulièrement avantageux que l'anneau soit un anneau fendu de forme hexagonale dont les sommets dépassent naturellement de la gorge du manchon pour pénétrer dans la gorge d'accrochage de l'ajutage, les segments, les segments entre les sommets sont en grande partie logés dans la gorge du manchon.

Suivant une autre caractéristique avantageuse, le moyen de protection de la fixation du bouchon comprenant :
- un ajutage ayant une entrée évasée se poursuivant par un alésage lisse muni d'une rainure d'accrochage et d'un épaulement servant de butée au bouchon,
- le bouchon étant lisse extérieurement,
- un anneau de verrouillage logé au moins partiellement dans la gorge d'accrochage de l'ajutage,
- une gorge homologue de celle du manchon pour couvrir en verrouillage, l'anneau et bloquer le bouchon,
- un ensemble de perçages partant de l'intérieur du manchon et débouchant dans sa gorge,
- un outil de démontage muni de pions guidés dans le manchon de l'outil pour être poussés par une came dans les perçages et repousser l'anneau dans la gorge de l'ajutage pour escamoter l'anneau de verrouillage et libérer le bouchon accroché aux pions pour être extrait de l'ajutage.

Enfin dans le cas de ce moyen de protection, il est avantageux que le manchon comporte trois perçages et l'outil trois pions commandés par une came trilobée et rappelés contre la came par aimantation.

Cela permet de répartir régulièrement les efforts exercés à la fois sur l'anneau pour le démontage et sur le manchon pour son extraction.

Suivant une autre caractéristique avantageuse, le robinet de gaz comprend un piston logé dans le corps du robinet au-dessus d'une chambre dans laquelle débouche le passage avec son siège d'étanchéité, se compose d'un manchon de guidage installé dans l'alésage du corps et recevant une tige terminée à une extrémité par une tête accrochée à la poignée et à l'autre extrémité par un support muni d'un élément d'obturation coopérant avec le siège d'étanchéité.

### Dessins

La présente invention sera décrite ci-après de manière plus détaillée à l'aide d'un exemple de réalisation d'un robinet de bouteille de gaz représenté dans les dessins annexés dans lesquels :
- la figure 1 est une vue en coupe axiale du robinet selon l'invention,
- la figure 2 est une vue en coupe axiale correspondant à la figure 1 mais sans le bouchon à clapet,
- la figure 3 est une demi-vue en coupe axiale du bouchon à clapet,
- la figure 4 est une vue en perspective partiellement éclatée et coupée du robinet de la figure 1,
- la figure 5 est une vue éclatée non coupée du robinet avec un outil pour le montage/démontage du bouchon à clapet, et
- la figure 6 est une vue éclatée non coupée du robinet avec un outil de mise en place de l'anneau de sécurité,
- la figure 7 montre dans ses deux parties 7A, 7B une variante d'anneau de sécurité,
   - la figure 7A montre une vue en demi-coupe du bouchon avec l'anneau de sécurité appliqué contre son côté, et
   - la figure 7B est une vue en plan de la variante d'anneau de sécurité selon la figure 7A,
- la figure 8 montre une vue partielle de l'ajutage de sortie et d'un bouchon à clapet et de sa protection contre le démontage non autorisé selon un autre mode de réalisation,
- la figure 8A est une vue en perspective du bouchon de la figure 8 montrant la forme particulière de la prise d'outil,
- la figure 9 est une vue en perspective coupée axialement de l'ajutage muni du bouchon selon la figure 8A,
- la figure 10 est une vue de côté partiellement coupée de la l'ajutage et d'un bouchon porté par un outil de montage correspondant à un autre mode de réalisation de la fixation du bouchon dans l'ajutage de sortie et de son moyen de protection,
- la figure 11A est une vue en coupe axiale du bouchon de la figure 10,
- la figure 11B est une vue en perspective en coupe axiale du bouchon de la figure 10,
- la figure 11C est une vue en perspective du bouchon montrant son ressort de verrouillage,
- la figure 11D est une vue en perspective du bouchon dont la partie limitant la gorge du ressort de verrouillage a été enlevée pour montrer la forme particulière du ressort de verrouillage,
- les figures 12A-12D sont différentes vues montrant les étapes du démontage du bouchon à clapet selon la figure 10 :

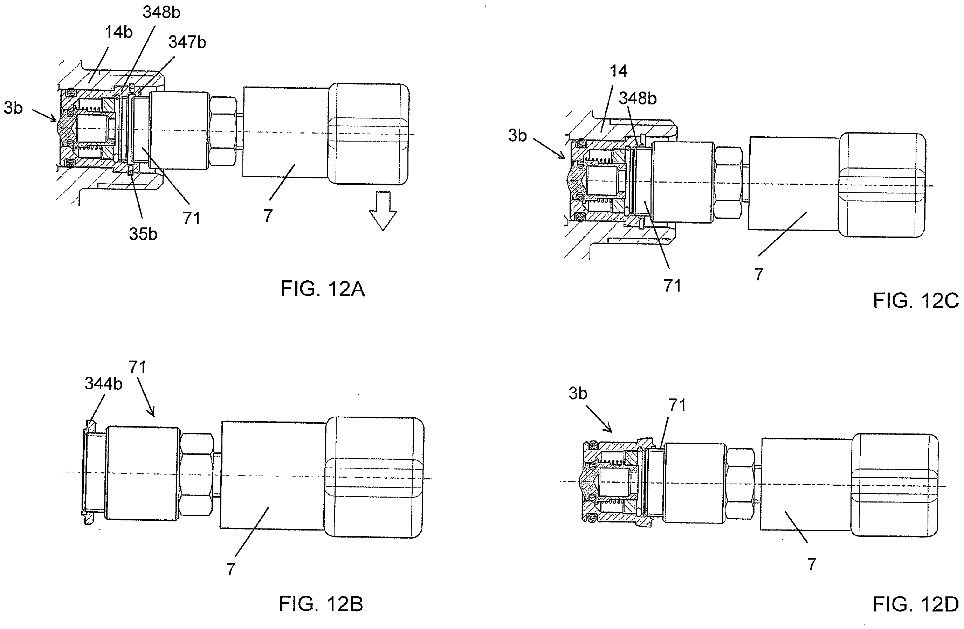

   - la figure 12A montre la mise en place de l'outil sur l'entrée du bouchon pour casser le bouchon,
   - la figure 12B montre l'outil portant la partie cassée du bouchon,
   - la figure 12C montre l'étape suivante du démontage par vissage de l'outil dans la partie restante du manchon du bouchon,
   - la figure 12D montre la partie du bouchon ainsi extraite de l'ajutage,

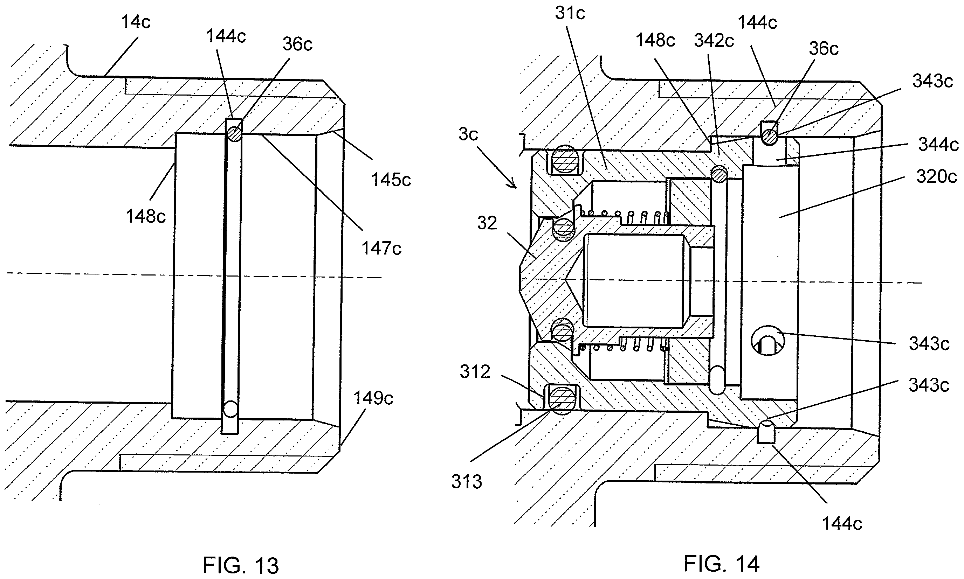

- la figure 13 est une vue en coupe axiale d'un autre mode de réalisation de l'ajutage de sortie,
- la figure 14 est une vue en coupe axiale de l'ajutage de la figure 13 muni de son bouchon,

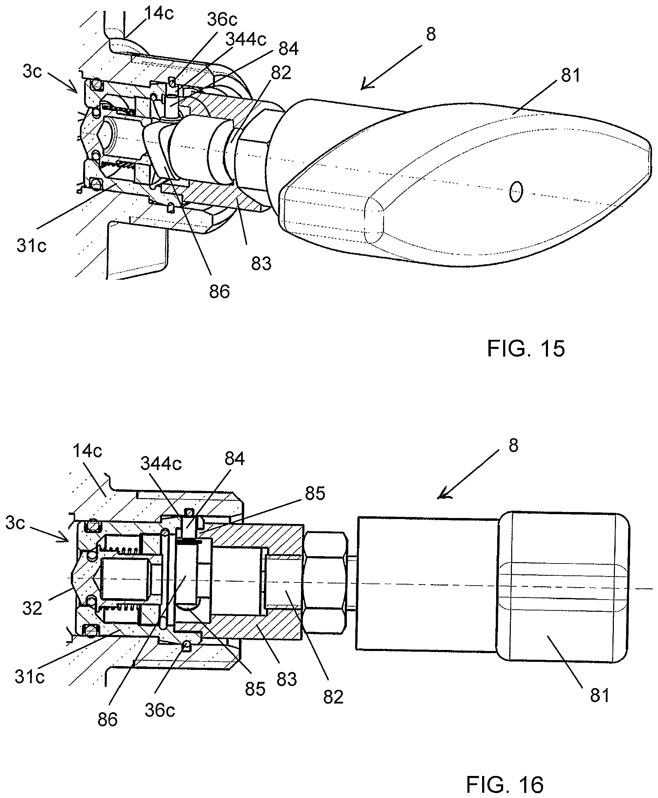

- la figure 15 est une vue en perspective d'un outil de démontage appliqué à un bouchon selon la figure 14,
- la figure 16 est une vue de côté de l'outil et de l'ajutage avec le bouchon en coupe axiale, l'ensemble étant en phase d'extraction du bouchon selon la figure 14.

Par convention, les indications d'orientation sont celles des différentes figures.

### Description de modes de réalisation de l'invention

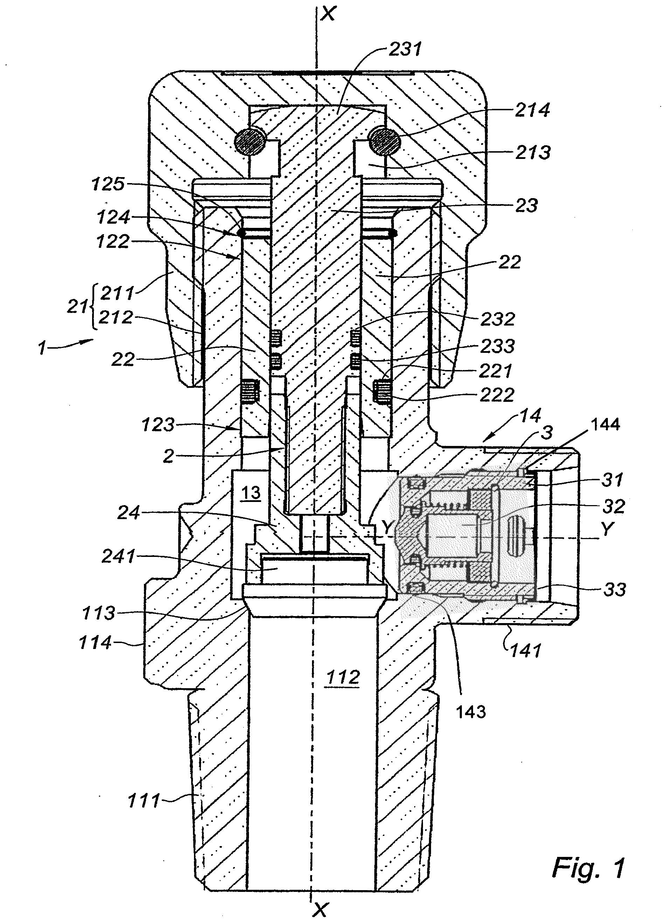

Selon la figure 1, l'invention a pour objet un robinet de bouteille de gaz composé d'un corps 1 dont la partie inférieure 11 de forme tronconique est munie d'un filetage tronconique 111 pour se visser dans le taraudage de la bouteille de gaz à l'aide de la prise d'outil 114. Le corps 1 a une partie supérieure 12 logeant le piston 2 commandant l'ouverture/fermeture du robinet. Le corps 1 a également un ajutage de sortie 14 pour le remplissage de la bouteille et la distribution du gaz. Cet ajutage 14 loge un bouchon à clapet 3 n'autorisant que la distribution du gaz, c'est-à-dire le passage du gaz de la bouteille vers la sortie et bloquant le passage inverse du gaz pour interdire un remplissage frauduleux.

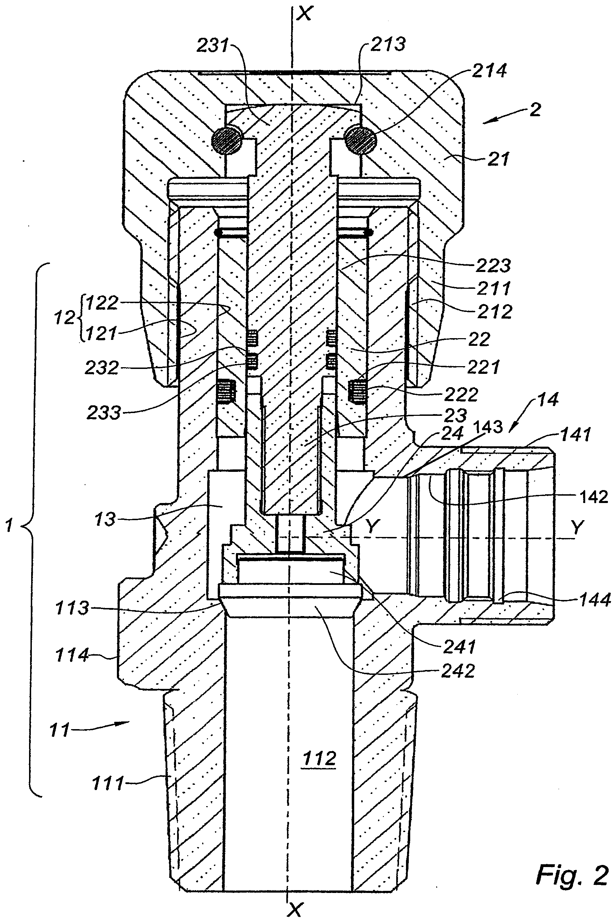

De façon plus détaillée, selon les figures 1 et 2, le corps 1 comporte, dans sa partie inférieure 11, un passage axial 112 d'axe xx se terminant par un siège d'étanchéité 113 débouchant dans une chambre 13 située sous la partie supérieure 12 et reliée à l'ajutage 14.

La partie supérieure 12 a un filetage extérieur 121 et un alésage 122.

Sur le côté du corps 1, l'ajutage de sortie 14 débouchant dans la chambre 13, servant au remplissage de la bouteille et à la distribution du gaz, comporte un filetage extérieur 141 pour visser le raccord du tuyau de gaz. Intérieurement, l'ajutage 14 a un filetage intérieur 142 pour recevoir le bouchon à clapet 3. En amont du filetage intérieur 142, l'ajutage a une surface d'étanchéité 143 pour coopérer avec le bouchon à clapet 3 ; en aval du filetage 142, l'ajutage a une gorge intérieure 144 servant à l'accrochage d'un anneau de sécurité couvrant le bouchon à clapet 3 une fois celui-ci installé.

La partie supérieure 12 du corps 1 loge le piston 2 commandant l'ouverture et la fermeture du siège d'étanchéité 113. Le piston 2 se compose extérieurement d'une poignée 21 coiffant la partie supérieure 12. La poignée a une jupe 211 munie intérieurement d'un filetage 212 coopérant avec le filetage extérieur 121 de la partie supérieure 12 pour actionner le piston. Le piston 2 comporte un manchon de guidage 22 installé de manière serrée dans l'alésage 122 de la partie supérieure. L'alésage 122 forme un épaulement 123 pour servir d'appui au manchon de guidage 22 bloqué en haut par un anneau élastique 125 accroché dans une gorge 124 de l'alésage 122. Le manchon 22 a une gorge périphérique 221 dans sa partie inférieure pour recevoir un joint d'étanchéité 222 pour fermer le passage entre le manchon 22 et l'alésage 122. Le manchon 22 a un alésage 223 qui reçoit une tige de manœuvre 23 dont la tête 231 est retenue contre le fond du logement 213 de la poignée par une goupille 214 pour être solidaire en translation de la poignée 21 suivant l'axe xx.

En partie inférieure (selon l'orientation de la figure), la tige de manœuvre 23 est reliée à un support 24 muni d'un élément d'étanchéité 241 en forme de pièce de rotation terminé par une surface extérieure 242 conique pour coopérer avec le siège d'étanchéité 113 du passage axial 112.

La tige de manœuvre 23 munie de deux gorges 232 logeant chacune un joint d'étanchéité 233 pour réaliser l'étanchéité entre la tige de manœuvre 23 et l'alésage 223 du manchon de guidage 22, coulisse dans le manchon de guidage 23 sans être solidaire en rotation de la poignée.

La structure du piston 2 décrite ci-dessus permet d'avoir un élément d'obturation 241 ayant une surface importante passant juste au montage dans l'alésage 122 du corps 1. La tige de manœuvre 23 a une section réduite puisqu'elle coulisse dans le manchon de guidage 22. Pour des raisons analogues, la tige de manœuvre 23 est complétée par le support de piston 24 dont le diamètre le plus grand est supérieur à celui de l'alésage 223 du manchon de guidage 22.

Le piston 2 est représenté en position fermée à la figure 2.

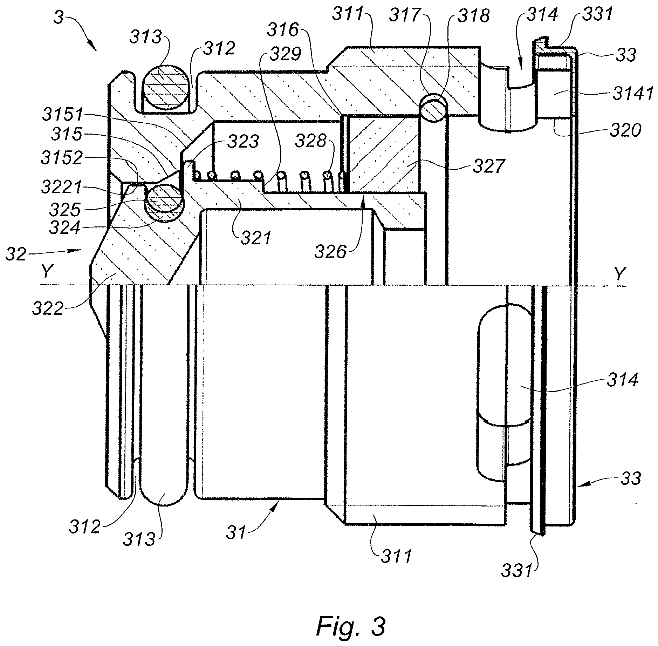

Selon les figures 1 et 3, le bouchon à clapet 3 représenté à échelle agrandie à la figure 3, se compose d'un manchon 31 logeant un clapet 32. Le bouchon 3 a un axe yy qui coïncide avec l'axe yy de l'ajutage 14. Pour simplifier la description, il sera fait référence au côté amont et au côté aval selon l'axe yy, correspondant au sens de passage du gaz sortant. Le côté amont est tourné vers la chambre 13 et le côté aval, vers la sortie de l'ajutage 14.

Le bouchon à clapet 3 qui doit assurer l'inviolabilité du réservoir et interdire son remplissage frauduleux à travers l'ajutage 14 de distribution de gaz est muni d'un moyen de protection de sa fixation dans l'ajutage. Le moyen de protection de la fixation du bouchon à clapet est réalisé dans ce premier mode de réalisation par la forme particulière de la prise d'outil et de celle de l'outil pour interdire l'accès à un outil de forme usuelle. Ce mode de réalisation du moyen de protection de fixation sera décrit ci-après.

Le manchon 31 a un filetage extérieur 311 pour se visser dans le filetage intérieur 142 de l'ajutage de sortie 14. Au-delà du filetage 311, le manchon 3 a une gorge extérieure 312 recevant un joint d'étanchéité 313 pour coopérer avec la surface d'étanchéité 143 de l'ajutage 14. En aval du filetage 311, dans le sens de passage du gaz pour la distribution, le manchon 31 a une prise d'outil constituée par trois logements 314 oblongs, répartis de façon équiangulaire (120°) autour de l'axe yy du bouchon 3. Ces logements 314, de préférence traversants, de forme oblongue périphérique, débouchent par une entrée axiale 3141 sur le bord extérieur 319 du bouchon 3. Ce bord extérieur 319 reçoit un anneau de sécurité 33 muni d'un bec périphérique 331 pour s'accrocher dans la gorge 144 de l'ajutage 14.

Intérieurement, le manchon 31 a un siège d'étanchéité 315 avec un retour 3151 suivi, en aval, d'un épaulement 316, lui-même suivi d'une gorge 317 pour un anneau de blocage 318 du clapet 32. Le manchon 31 reçoit le clapet 32 formé d'un corps tubulaire 321 muni d'un fond 322 terminé extérieurement, du côté avant, par une collerette de butée 323 coopérant avec le retour 3151 du siège d'étanchéité 315. Cette collerette 323 est précédée, en amont, par une gorge 324 logeant un joint 325 coopérant avec le siège d'étanchéité 315.

La collerette 323 sert de butée de retenue bloquant l'avancée du clapet 32 dans le manchon 31. Le clapet 32 est guidé par sa surface périphérique de guidage 326 dans un anneau de guidage 327 servant également d'appui pour le ressort de rappel 328 appuyé contre la collerette 323 du clapet 32. L'anneau 327 est retenu contre l'épaulement 316 par l'anneau de blocage 318.

Comme le montre la figure 3, le fond 322 est muni d'un bord périphérique 3221 de forme cylindrique circulaire, d'axe yy, pour venir et se guider dans l'entrée, côté amont, du siège d'étanchéité 315. Cette entrée 3152 est une forme cylindrique circulaire d'axe yy pour recevoir, guider et tenir le clapet 32, par ailleurs tenu, côté aval, par l'anneau de guidage 327.

L'engagement du bord périphérique 3221 dans cette entrée 3152 maintient le clapet 32 en position de fermeture pour que son joint 325 s'appuie régulièrement contre le siège 315 et aussi pour guider le clapet 32 au début de son ouverture.

La surface extérieure du corps 321 forme un épaulement 329 en amont de la surface de guidage 326 pour venir en appui contre l'anneau 327, limiter ainsi l'ouverture du clapet 32 et éviter l'écrasement du ressort 328.

Le bouchon à clapet 3 est installé dans l'ajutage de sortie 14 comme le montre la figure 1.

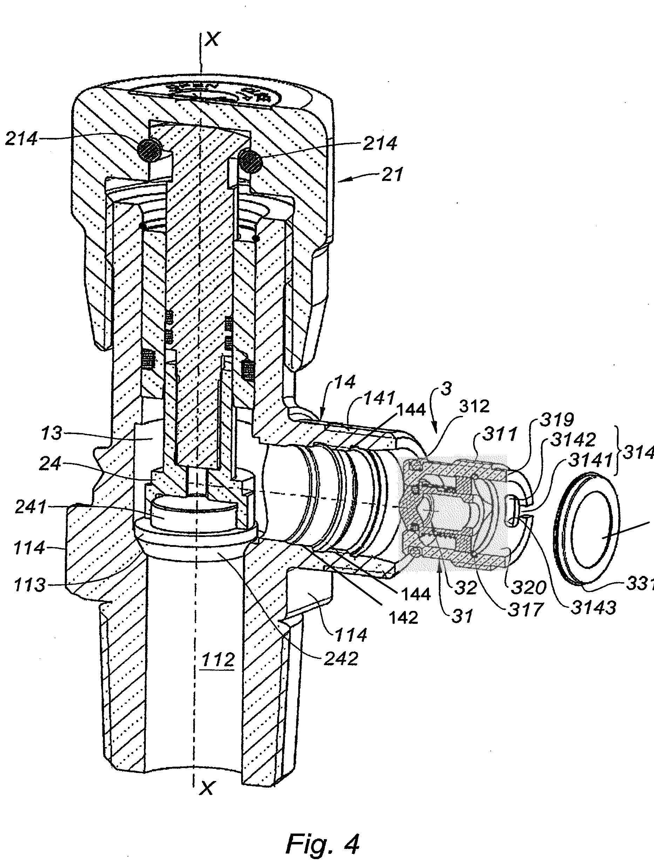

La figure 4 montre le bouchon à clapet 3 présenté dans l'axe yy qui est aussi celui de l'ajutage 14, mettant en évidence la forme particulière d'un des logements de prise d'outil 314, les deux autres n'étant pas représentés dans cette coupe.

La figure 4 montre l'anneau de sécurité 33 qui coiffe le bord extérieur 319 du manchon 31 et dont le bord en saillie en forme de bec 331 viendra s'engager et se verrouiller dans la gorge 144 de l'ajutage 14. La vue en perspective met en évidence la forme particulière du logement 314, oblong, orienté dans le sens périphérique du manchon 31 derrière son bord 319. Le logement 314 a deux extrémités 3142, 3143 de part et d'autre de son entrée 3141. L'anneau de sécurité 33 coiffant l'entrée 3141 des logements 314 est mis en place après l'installation du bouchon 3 dans l'ajutage 14 ; il constitue un témoin d'inviolabilité.

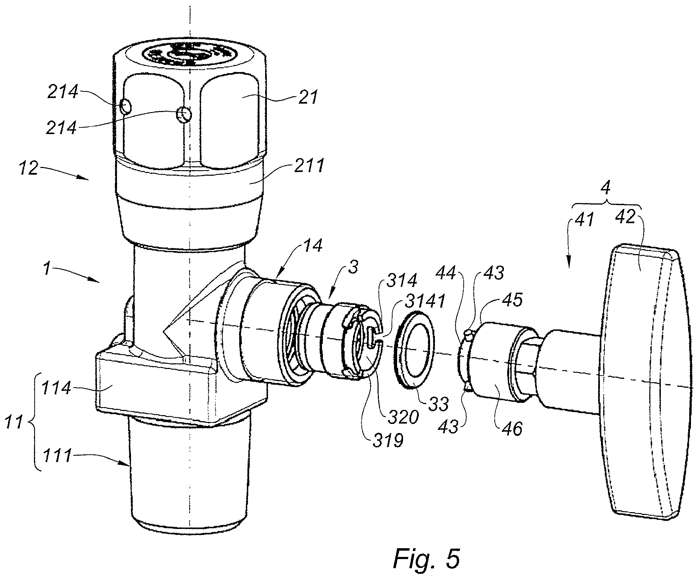

Le montage/démontage du bouchon à clapet 3 se fait à l'aide d'un outil 4 comme celui représenté à la figure 5. Il s'agit d'une clé en T comportant une tige 41 terminée par une poignée 42. La partie de prise de cette tige est constituée par trois ergots cylindriques 43 répartis de façon équiangulaire sur une partie cylindrique 44 circulaire, de diamètre sensiblement égal au diamètre de l'entrée 320 du manchon 31. Pour mettre en place la poignée de manœuvre 4 comme une liaison de type baïonnette, on aligne les trois ergots cylindriques 43 face aux entrées 3141 des prises d'outil 314 puis on manœuvre dans le sens du vissage ou du dévissage de sorte que, selon le sens de pivotement de la poignée 4, les ergots 43 s'engagent dans la partie correspondante 3142, 3143 des logements oblongs 314 de la prise d'outil et permettent de tenir le bouchon 3 pour le présenter à l'entrée de l'ajutage 14 et du filetage puis le visser et se dégager en fin de vissage ou effectuer l'opération inverse.

Au-delà de la partie cylindrique 44 portant les ergots 43, la poignée 4 forme un épaulement 45 avec sa partie cylindrique 46 de section légèrement inférieure à la section de l'entrée de l'ajutage 14 pour que cet épaulement 45 s'appuie sur le bord 319 du manchon 31.

L'anneau de sécurité 33 est présenté devant le bouchon à clapet 3 mais pour le vissage du bouchon 3 dans le filetage intérieur de l'ajutage 14, l'anneau 33 n'est pas interposé entre le bouchon 3 et l'outil 4. Ce n'est qu'après la mise en place du bouchon 3 dans l'ajutage 14 que l'on enfonce l'anneau 33 à l'aide d'un outil cylindrique non représenté pour engager son bord 331 en forme de bec dans la gorge 144 de l'ajutage 14 en couvrant ainsi les entrées 3141 des logements 314 de la prise d'outil.

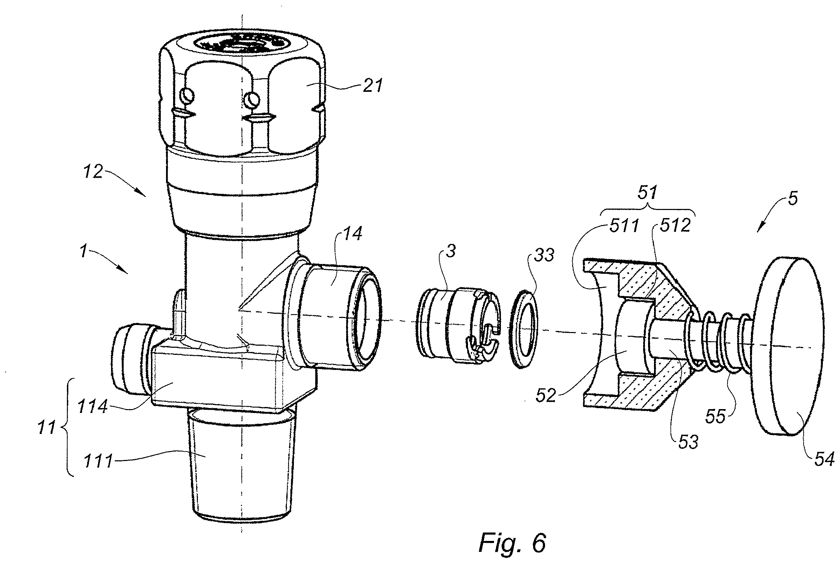

Selon la figure 6, le montage de l'anneau 33 se fait à l'aide d'un outil 5 ayant un corps 51 de forme enveloppante avec, à l'avant, une chambre 511 pour coiffer précisément l'ajutage de sortie 14 et centrer l'outil, le bouchon à clapet étant en place dans l'ajutage 14. La chambre 511 se poursuit par un logement 512 pour le piston 52 à l'extrémité d'une tige 53 débouchant du corps 51 dans son axe et portant une poignée 54. Un ressort de rappel 55 tient élastiquement le piston 52 dans son logement 512.

Le piston 52 a sensiblement le diamètre de l'entrée de l'ajutage 14 pour y pénétrer et y pousser l'anneau de sécurité 33 dont le bord 331 sera forcé dans la gorge 144.

Pour dévisser le bouchon 3, il faut détruire l'anneau 33 qui est en général en matière plastique, pour accéder aux logements 314 et pouvoir installer l'outil 4 pour dévisser le bouchon.

Ainsi, comme décrit ci-dessus, l'accès au bouchon est d'abord couvert par l'anneau de protection ou de sécurité qui est non seulement un témoin d'inviolabilité mais réalise en outre une protection mécanique efficace de l'accès à la prise d'outil du manchon. Et même si cet anneau est arraché, la prise d'outil du manchon ne peut être utilisée qu'avec un outil spécialement adapté n'ayant pas d'équivalent parmi les outils usuels et de plus exigeant des dimensions précises et adaptées exactement.

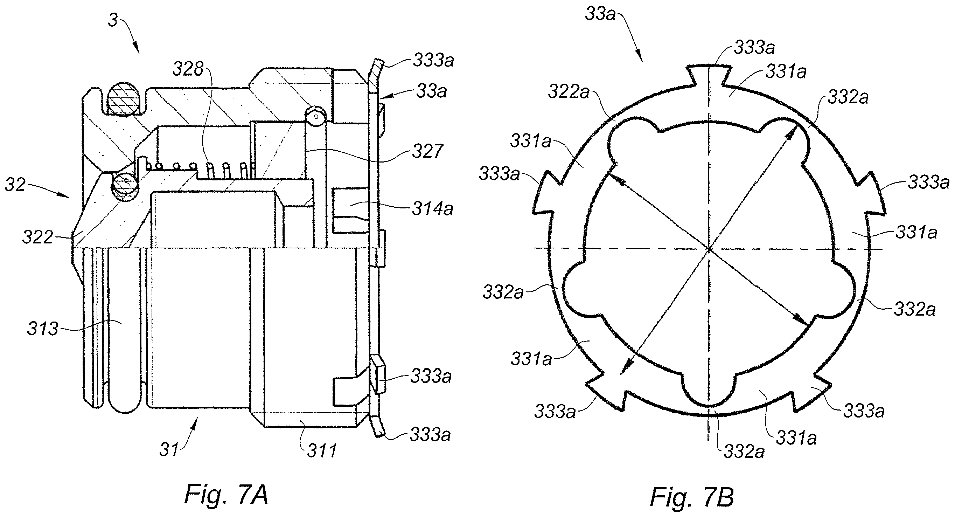

La figure 7, dans ses parties 7A, 7B, montre une variante d'anneau de sécurité 33a en forme de couronne. Cet anneau est cassant au démontage.

La couronne de l'anneau est composée de segments 331a reliés par des pontets 332b de section réduite. Ces pontets s'ouvrent du côté du diamètre intérieur de l'anneau. Extérieurement, l'anneau comporte des pattes d'accrochage 333a ayant la même fonction que le bord 331 de l'anneau 33 des figures ci-dessus.

Cet anneau 33a s'installe comme l'anneau 33 en jouant sur l'élasticité de sa couronne grâce aux pontets 332a pour engager les pattes 333a dans la gorge 144 de l'ajutage 14. Cette gorge 144 peut avoir une forme et une position légèrement différentes de ce qui est représenté à la figure 4.

L'anneau 33a est en métal ; il est cassé au démontage.

La figure 7A montre l'anneau 33a en demi-coupe, appliqué contre le bouchon 3 qui ne sera pas décrit une nouvelle fois ; le bouchon 3 porte les mêmes références que ci-dessus pour ces éléments qui sont les mêmes que ceux du bouchon précédemment décrit ci-dessus.

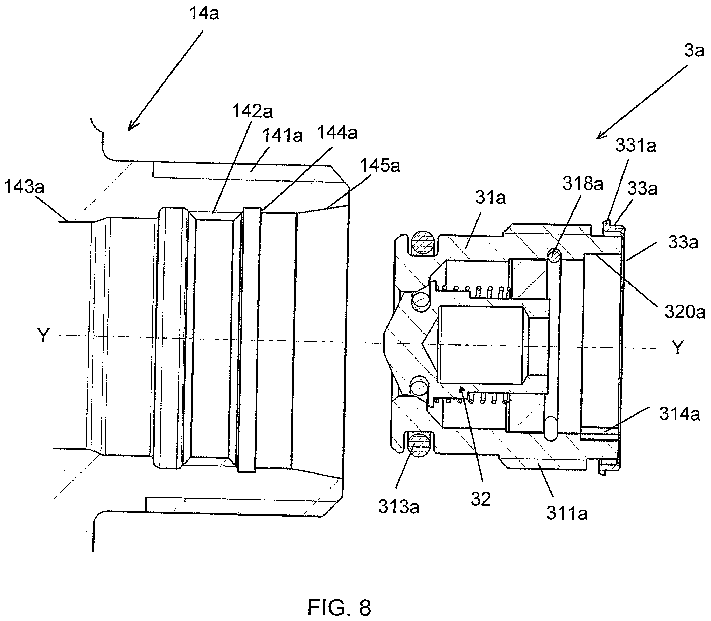

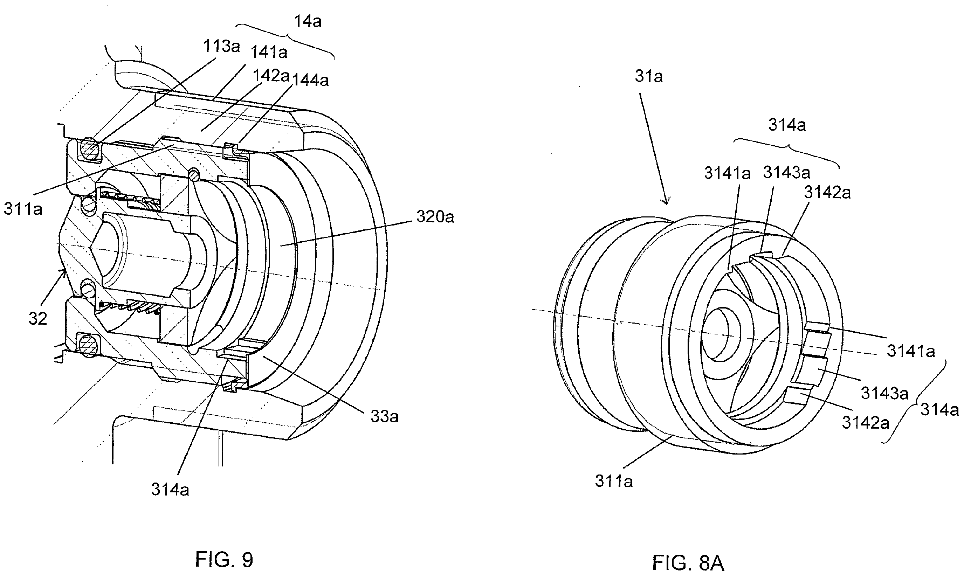

D'autres modes de réalisation d'un robinet de bouteille à gaz ayant un moyen de protection de la fixation du bouchon à clapet logé dans l'ajutage seront décrits ci-après à l'aide des figures 8 à 16 limitées à l'ajutage 14 et au bouchon à clapet 3 ; les figures et la description utilisent si possible les mêmes références avec un suffixe que les éléments communs au mode de réalisation précédent dont la description ne sera pas reprise dans tous ses détails. Les éléments modifiés des variantes, porteront en général les mêmes références numériques suivies d'un suffixe littéral. Le clapet 32 non modifié ne sera pas redécrit.

Les figures 8-9 montrent une première variante du bouchon à clapet 3a.

Selon la figure 8, l'ajutage 14a identique à celui de la figure 2 comporte un filetage extérieur 141a, un filetage intérieur 142a ainsi qu'une surface d'étanchéité 143a et une gorge intérieure 144a ainsi qu'une entrée évasée 145a qui correspond au côté de sortie de l'ajutage 14a.

Le bouchon à clapet 3a diffère du bouchon 3 de la figure 3, par l'entrée 320a du manchon 31a munie d'une prise d'outil 314a formée d'une dent 3141a, d'une rampe 3142a et d'un creux de verrouillage 3143a permettant l'encliquetage et l'accrochage d'un outil de forme complémentaire, engagé dans l'entrée 320a dans la direction axiale YY et glissant par rotation dans un sens ou dans l'autre autour de l'axe YY pour passer sur la rampe et s'engager dans le creux de verrouillage.

Comme le montre la figure 8A, l'entrée 320a comporte de préférence deux telles prises d'outil 314a, notamment décalées de façon non symétrique rendant impossible l'utilisation d'un outil usuel tel qu'une lame de tournevis pour s'engager frontalement dans cette prise d'outil et espérer faire tourner le manchon 31 pour le dévisser frauduleusement. De façon avantageuse, les deux prises d'outils sont actives dans des sens de rotation opposés, l'une venant en prise pour le vissage et l'autre pour le dévissage.

L'outil est une pièce à main munie d'une extrémité de forme complémentaire à celle de la cavité constituée par l'entrée 320a et de la ou des prises d'outil 314a pour s'engager dans cette cavité et visser ou dévisser le manchon. Cet outil n'est pas représenté.

Le moyen de protection est complété par un anneau de sécurité 33a couvrant la face avant du manchon 31a et le profil des prises d'outil 314a et accroché de manière non démontable dans la gorge 144a comme le montre la figure 9, par son bord à crochet 331a.

Les prises d'outil 314a dans leur forme la plus simple sont orientées parallèlement à la direction axiale YY mais selon une variante, elles sont inclinées, par exemple dans la direction hélicoïdale et en particulier les directions des deux prises d'outil 314a sont d'orientation opposée.

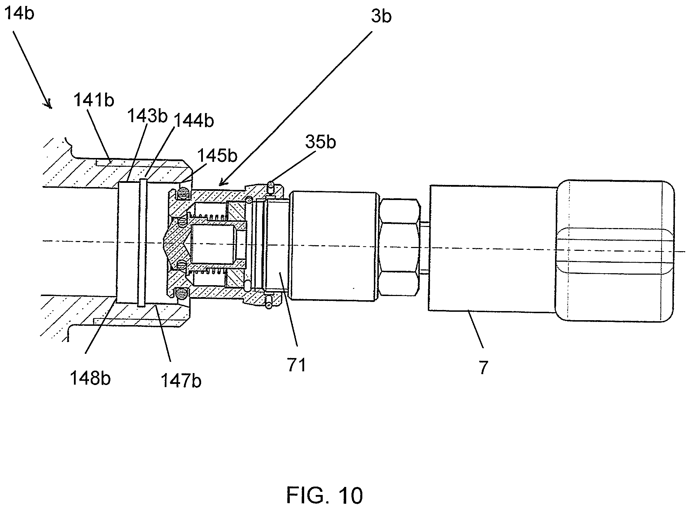

Les figures 10-13D montrent un autre mode de réalisation de robinet de bouteille à gaz dont le bouchon à clapet 3b est une autre variante de l'invention qui diffère des précédents modes de réalisation en ce qu'il n'est pas vissé dans l'ajutage 14b, mais y est bloqué par un anneau élastique de verrouillage 356b venant se loger dans la gorge 144b de l'entrée de l'ajutage 14b ayant des surfaces d'étanchéité 143b et un cône d'entrée 145b.

Le bouchon à clapet 3b diffère des précédents par sa fixation à l'ajutage 14b et à son moyen de protection de celle-ci pour en interdire l'accès non autorisé à partir du côté de l'entrée de l'ajutage 14b. L'anneau de verrouillage 356b est certes déformable élastiquement mais une fois accroché à la rainure 144b son élasticité n'a aucun effet si une traction est exercée sur le manchon. Le déverrouillage du bouchon à clapet 3b ne peut se faire que par l'enlèvement de l'anneau de verrouillage grâce à son montage particulier dans l'ajutage 14b.

Ainsi, l'ajutage 14b a une entrée évasée 145b se poursuivant par un alésage lisse 147b muni de la rainure d'accrochage 144b et un épaulement 148b servant de butée au bouchon 3b.

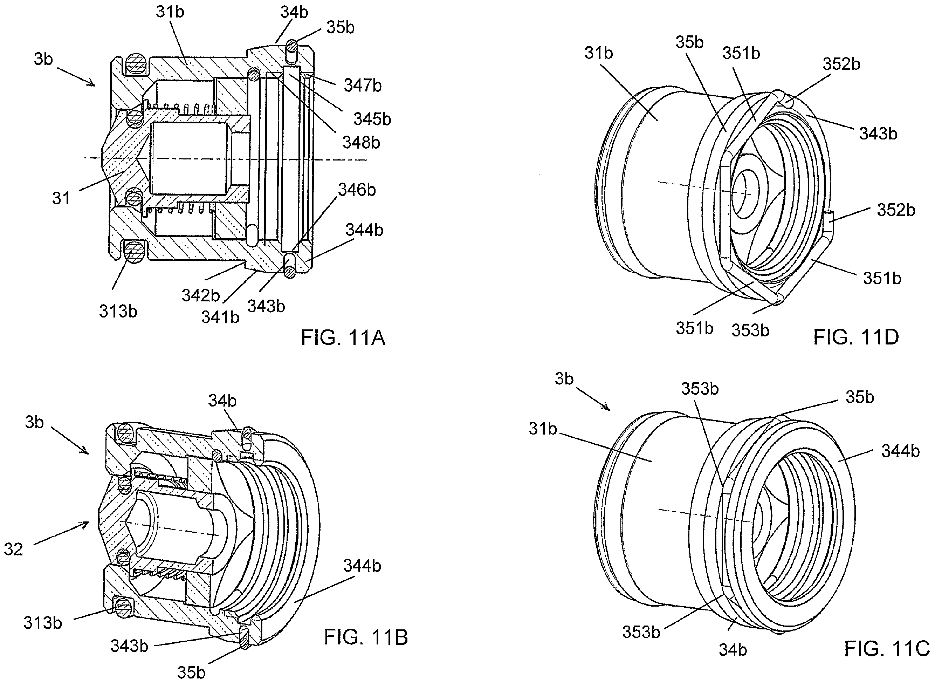

Selon la figure 11A, le bouchon 3b comporte à l'arrière une couronne 34b avec un avant conique 341b et un bord de butée 342b ainsi qu'une gorge 343b délimitée par la partie arrière 344b.

Intérieurement, le manchon 31b a une gorge 345b réduisant l'épaisseur de la paroi 346b du fond de la gorge 343b. Au-delà de l'entrée, de part et d'autre de la gorge 345b, il y a un filetage divisé en deux parties, un filetage d'entrée 347b et un filetage de fond 348b.

La gorge 343b loge l'anneau élastique de verrouillage 35b de forme non circulaire de façon à être retenu par endroit dans la gorge 343b et en dépasser en d'autres endroits pour venir dans la gorge de verrouillage 144b lorsque le bouchon 3b est engagé par son manchon 31b dans l'ajutage 14b.

L'anneau 35b est de préférence de forme polygonale, notamment hexagonale, ouverte, formé de segments 351b (figure 11B) dont l'un 352b est coupé.

L'anneau élastique 35b, par exemple en acier à ressort, peut ainsi s'ouvrir élastiquement pour être logé dans la gorge 343b en étant ouvert en tension. Dans cette position de montage (figure 11C), l'anneau 35b dépasse de la gorge 343b par les sommets 353b de la forme polygonale.

Le bouchon à clapet 3b, monté sur l'extrémité filetée 71 d'un outil 7, se pousse simplement dans l'ajutage 14 jusqu'à ce que sa butée 342b rencontre l'épaulement 148b de l'ajutage.

Le bouchon à clapet 3b tenu par le manchon 31b s'engage dans l'ajutage 14b en conduisant l'anneau 35b, comprimé, naturellement par le cône d'entrée 145b jusqu'à la gorge 144b dans laquelle l'anneau 35b se détend et solidarise le manchon 31b à l'ajutage 14b puisque l'anneau est, selon les parties de sa périphérie, dans l'une et dans l'autre gorge 343b, 144b.

La vue en coupe axiale (figure 11A), la vue en perspective coupée (figure 11B) et la vue en perspective (figure 11C) montrent de façon plus détaillée la structure du bouchon 3b.

La vue en perspective (figure 11D) du bouchon 3b dont la partie arrière 344b du manchon 3b bordant la gorge 343b a été enlevée, laisse apparaître la forme de l'anneau élastique ouvert 35b de profil polygonal, ici hexagonal. Au montage, les sommets 353b du profil de l'anneau 35b sont enfoncés par le cône d'entrée 145b par déformation élastique.

Ce moyen de protection de la fixation du manchon 3b se démonte avec l'outil 7 comme cela apparaît aux figures 12A-12D.

La première étape de démontage (figure 12A) consiste à visser l'extrémité filetée 71 de l'outil 7 dans le filetage d'entrée 347b du manchon devant la gorge 343b sans atteindre le filetage de fond 348b puis de basculer l'outil 7 (selon la flèche) pour casser le voile de matière 346b qui constitue le fond de la gorge 343b. On peut alors enlever cette partie arrière 344b qui reste sur le filetage 71.

L'anneau 35b qui est à l'état tendu, dans la gorge 343b du manchon 31b se contracte alors naturellement et se dégage de la gorge 144b de l'ajutage pour s'enlever.

Puis il suffit ensuite de visser l'extrémité 71 de l'outil 7 sur le filetage de fond 348b (figure 12C) puis de tirer le manchon 31b avec son clapet 32 (figure 12D) pour l'extraire.

Les figures 13-16 montrent une autre variante de robinet de bouteille à gaz et de son moyen de protection.

Selon la figure 14, l'ajutage 14c a une structure voisine de celle du mode de réalisation de la figure 11. Le bouchon 3c diffère des précédents modes de réalisation par sa fixation dans l'ajutage 14c.

L'ajutage 14c a une forme analogue à celle du mode de réalisation de la figure 10, avec, intérieurement, une gorge 144c dans laquelle est logé un anneau fendu 36c de forme naturelle hors tension, circulaire, mais de diamètre inférieur à celui de la gorge 144c de façon à en dépasser par endroit. La gorge 144c a une profondeur suffisante pour que l'anneau fendu 36c puisse être refoulé et escamoté complètement dans la gorge 144c comme cela sera décrit ci-dessous. Le bouchon 3c n'est pas vissé mais bloqué par l'anneau de verrouillage 36c venant s'engager dans la gorge 343c de la couronne extérieure 34c à l'arrière du manchon 31c. L'avant de la couronne 34b forme un bord de butée 342c venant en appui contre l'épaulement 148c.

Dans le plan axial de la gorge 343c, le manchon 31c a des perçages 344c, répartis en périphérie, par exemple trois perçages radiaux débouchant dans la gorge 343c logeant l'anneau 36c et aussi dans l'entrée 320c.

La mise en place et le démontage du bouchon à clapet 3c se font à l'aide d'un outil 8 (figures 15, 16) ayant une poignée 81 portée par une tige axiale 82 dont l'extrémité est munie d'un manchon 83 adapté extérieurement au moins en partie, localement, au diamètre intérieur de l'entrée 320c du manchon 31c pour venir en butée contre la face arrière 149c (figure 13) interne de l'entrée 320c.

Le manchon 83 de l'outil a trois pions 84 coulissants dans des perçages 85 du manchon de l'outil et coopérant avec une came trilobée 86 qui, par pivotement, repousse les pions 84 en synchronisme pour les faire venir en saillie ou les rétracter. Les pions 84 sont rappelés contre la came 86 par effet magnétique.

Le manchon 83 est libre en rotation par rapport à la tige 82, la poignée 81 et la came 86 de façon qu'en tenant le manchon 83 avec ses pions 84 alignés sur les perçages 344c, on puisse faire pivoter la came 86.

La disposition des pions 84 sur l'outil 8 est homologue à celle des perçages 344c du manchon 31c sur lesquels ils sont alignés de sorte qu'il suffit d'engager l'outil 8 dans le manchon 31c du bouchon et d'orienter la position de rotation de l'outil (par exemple en utilisant un repère) pour que les pions 84 puissent être poussés dans les perçages 344c du manchon 31c et repousser l'anneau 36c dans la gorge pour ensuite tirer et extraire le bouchon à clapet 3c accroché à l'outil 8 par les pions 84.

### NOMENCLATURE DES ELEMENTS PRINCIPAUX

- 1: Corps de robinet
11 Partie inférieure de forme tronconique
111 Filetage tronconique
112 Passage axial
113 Siège d'étanchéité/collerette
114 Prise d'outil
12 Partie supérieure
121 Filetage extérieur
122 Alésage
123 Epaulement
124 Gorge
125 Anneau
13 Chambre
14, 14a,b,c Ajutage de sortie (remplissage/distribution)
141, 141a,b,c Filetage extérieur
142, 142a,b,c Filetage intérieur
143, 143a,b,c Surface d'étanchéité
144, 144a,b,c Gorge d'accrochage
145, 145a,b,c Entrée évasée
147, 147b,c Alésage lisse
148b,c Epaulement formant une butée
- 2: Piston
21 Poignée
211 Jupe
212 Filetage
213 Logement
214 Goupille
22 Manchon de guidage
221 Gorge
222 Joint
223 Alésage
23 Tige de manœuvre
231 Tête
232 Gorge
233 Joint
24 Support
241 Elément d'obturation
242 Surface extérieure conique
- 3: Bouchon à clapet
31 Manchon
311 Filetage extérieur
312 Gorge extérieure
313 Joint
314 Logement formant une prise d'outil
3141 Entrée axiale
3142 Extrémité du logement
3143 Extrémité du logement
314a Prise d'outil
3141a Dent
3142a Rampe
3143a Creux de verrouillage
315 Siège d'étanchéité
3151 Retour
3152 Entrée cylindrique
316 Epaulement
317 Gorge de l'anneau de blocage
318 Anneau de blocage
319 Bord extérieur
32 Clapet
320, 320a Entrée
321 Corps de clapet
322 Fond
3221 Bord périphérique
323 Collerette de butée
324 Gorge
325 Joint
326 Surface de guidage
327 Anneau de guidage
328 Ressort de rappel
329 Epaulement
33, 33a Anneau de sécurité
331 Bord périphérique en forme de bec
331a Segment
332a Pontet
333a Patte
34b Couronne
341b Avant conique
342b Bord de butée
343b Gorge
344b Partie arrière
345b Gorge
346b Paroi du fond
347b Filetage d'entrée
348b Filetage de fond
35b Anneau élastique
351b Segment
352b Segment coupé
353b Sommet
36c Anneau fendu
343c Gorge
344c Perçages du manchon 31c
- 4: Outil de montage/démontage du bouchon à clapet 3
41 Tige
42 Poignée
43 Ergot cylindrique
44 Partie cylindrique circulaire
45 Epaulement
46 Partie cylindrique
- 5: Outil de mise en place de l'anneau de sécurité
51 Corps
511 Chambre
512 Logement
52 Piston
53 Tige
54 Poignée
55 Ressort de rappel
- 7: Outil
71 Extrémité avant filetée
- 8: Outil
81 Poignée
82 Tige axiale
83 Manchon
84 Pion
85 Perçage
86 Came

## Revendications

1. Robinet de bouteille de gaz comportant :
- un corps (1) se fixant sur la bouteille de gaz, traversé axialement par un passage (112) se terminant par un siège d'étanchéité (113) débouchant dans une chambre (13) et commandé par un élément d'obturation manœuvré par une poignée,
- un ajutage de sortie (14) communiquant avec la chambre (13) et recevant un clapet (32) s'ouvrant dans le sens de la sortie du gaz sous l'effet de la pression du gaz arrivant dans la chambre (13) après l'ouverture du passage (112) par l'élément d'obturation (241),
- un bouchon (3) à clapet fixé dans l'ajutage de sortie (14) et formé d'un manchon recevant ledit clapet (32),
- le manchon (31) ayant en aval du clapet (32) une prise d'outil (214) pour fixer/détacher le bouchon (3) de l'ajutage de sortie (14), robinet de bouteille à gaz **caractérisé en ce que**
- le manchon (31) du bouchon (3) a un siège d'étanchéité (315) contre lequel s'appuie le clapet (32),
- le manchon (31) a, extérieurement, dans le sens de passage du gaz sortant, une gorge (312) avec un joint d'étanchéité (313), un filetage (311) et une prise d'outil (314) se terminant en amont du bord extérieur (319),
- l'ajutage (14) a intérieurement dans le même sens de passage suivant l'axe (yy), une surface d'étanchéité (143), cylindrique, côté chambre (13), recevant en appui le joint d'étanchéité (313), cette surface étant suivie d'un filetage (142) recevant le filetage (311) du manchon (31), et
- le bouchon (3) installé dans l'ajutage de sortie (14) est muni d'un moyen de protection de la fixation du manchon (314, 144, 33 ; 144a, 314a, 14b, 145b, 344-347b) accessible à partir de la sortie de l'ajutage (14).

2. Robinet de bouteille de gaz selon la revendication 1,
**caractérisé en ce que**
le moyen de protection de la fixation du manchon (31) vissé dans l'ajutage (14) est constitué par une prise d'outil (314) pour visser / dévisser le bouchon (3) de l'ajutage de sortie (14) et d'un anneau de sécurité (33) couvrant le bord extérieur (319) du manchon (31) après mise en place du bouchon (3) dans l'ajutage (14), la prise d'outil étant réalisée dans le manchon en aval du clapet (32), cette prise d'outil (314) se terminant en amont du bord extérieur (319), une gorge d'accrochage (144) dans l'ajutage (14) pour le bord (331) d'un anneau de sécurité (33) couvrant le bord extérieur (319) du manchon (31) après la mise en place du bouchon (3) dans l'ajutage (14).

3. Robinet de bouteille de gaz selon la revendication 1,
**caractérisé en ce que**
- le manchon (31) comporte intérieurement et dans le sens amont-aval, suivant l'axe (yy), un siège d'étanchéité (315) rejoignant par son retour (3151), la surface intérieure du manchon (31) logeant un anneau de guidage (327) bloqué dans le manchon (31) en amont de la prise d'outil (314),
- le clapet (32) a un corps (321) en forme de manchon fermé côté amont par un fond (22) muni d'une gorge périphérique (324) logeant un joint d'étanchéité (325) pour coopérer avec le siège d'étanchéité (315) du manchon (31), la gorge (324) étant bordée, côté aval, par une collerette de butée (323) et se poursuivant par une surface de guidage (326) engagée dans l'anneau de guidage (327),
- le clapet (32) étant muni, sur le côté extérieur du corps (321), d'un ressort de rappel (328) comprimé entre la collerette (323) et l'anneau de guidage (327) pour pousser le clapet (32) en appui contre le siège d'étanchéité (315).

4. Robinet de bouteille de gaz selon la revendication 3,
**caractérisé en ce que**
le fond (322) a un bord périphérique (3221), cylindrique, circulaire, venant dans l'entrée amont (3152), cylindrique, circulaire, du siège d'étanchéité (315) pour stabiliser le clapet (32) par rapport à l'axe (yy) en position de fermeture.

5. Robinet de bouteille de gaz selon la revendication 3,
**caractérisé en ce que**
la surface extérieure du corps (321) du clapet (32) forme un épaulement (329) en amont de la surface de guidage (326) pour limiter la position d'ouverture du clapet (32) et l'écrasement du ressort de rappel (328), l'épaulement (329) venant en appui contre l'anneau de guidage (327), poussé par le gaz sortant.

6. Robinet de bouteille de gaz selon la revendication 2,
**caractérisé en ce que**
- la prise d'outil (314) est formée des logements allongés dans la direction périphérique du manchon (31) en amont du bord extérieur (319) et débouchant par une entrée (3141) dans le bord (319), les logements (314) traversant la paroi ayant deux extrémités périphériques (3142, 3143) de part et d'autre de leur entrée (3141).
[Note à l'imprimeur: veuillez replacer les revendications dans l'ordre selon leur présente numérotation]

7. Robinet de bouteille de gaz selon la revendication 1,
**caractérisé en ce que**
le moyen de protection du bouchon (3a) est composé :
- d'une gorge intérieure (144a) derrière l'entrée de l'ajutage (14a) et avant son filetage intérieur (142a), et
- d'au moins une prise d'outil (314a) à l'entrée (320a) du manchon (31a) formée d'une dent (3141a), d'une rampe (3142a) et d'un creux de verrouillage (3143a), orientés sensiblement dans la direction axiale (YY) du bouchon.
[Note à l'imprimeur: veuillez replacer les revendications dans l'ordre selon leur présente numérotation]

8. Robinet de bouteille de gaz selon la revendication 7,
**caractérisé en ce que**
le manchon (31a) comporte au moins deux prises d'outil (314a) orientées dans le même sens de rotation de l'outil ou dans le sens opposé.

9. Robinet de bouteille de gaz selon les revendications 2 et 7,
**caractérisé en ce qu'**il
le moyen de protection comporte un anneau de sécurité (33a) pour couvrir la face de l'entrée (320a) du manchon (31a) et la ou les prises d'outil (314a) et dont le bord (331a) est accroché de manière indémontable dans la gorge (144a) de l'ajutage (14a).

10. Robinet de bouteille de gaz selon la revendication 1,
**caractérisé en ce que**
le moyen de protection de la fixation du bouchon (3b) comprend :
- l'ajutage (14b) a une entrée évasée (145b) se poursuivant par un alésage lisse (147b) muni d'une rainure d'accrochage (144b) et d'un épaulement (148b) servant de butée au bouchon (3b),
- le bouchon (3b) étant lisse extérieurement avec une couronne (34b) munie d'un bord de butée (342b) et d'une gorge (343b) délimitée par une partie arrière (344b), la gorge étant, à l'état installé du manchon, dans une position en regard de la rainure d'accrochage (144b),
- un anneau élastique (35b) étant logé sous tension dans la gorge (343b) en dépassant à l'état monté et déformable pour être enfoncé dans cette gorge (343b) pour l'installation du bouchon (3b) dans l'ajutage (14b) jusqu'à ce que l'anneau (35b) puisse se détendre dans la rainure d'accrochage (144b) tout en restant aussi engagé dans la gorge (343b),
- intérieurement, le manchon (31b) ayant un filetage d'entrée (347b) suivi d'un filetage de fond (348b) séparé du filetage d'entrée par une gorge (345b) dans le plan de la gorge (343b) pour séparer la partie arrière (344b) du restant du manchon (31b) et constituer une partie détachable par rupture pour libérer l'anneau (35b).
[Note à l'imprimeur: veuillez replacer les revendications dans l'ordre selon leur présente numérotation]

11. Robinet de bouteille de gaz selon la revendication 10,
**caractérisé en ce que**
l'anneau (35b) est un anneau fendu de forme hexagonale dont les sommets (353b) dépassent naturellement de la gorge (343b) du manchon (31b) pour pénétrer dans la gorge d'accrochage (144b) de l'ajutage (14b), les segments (351b) entre les sommets (353b) sont en grande partie logés dans la gorge (34b) du manchon (31b).

12. Robinet de bouteille de gaz selon la revendication 1,
**caractérisé en ce que**
le moyen de protection de la fixation du bouchon (3c) comprenant :
- un ajutage (14c) ayant une entrée évasée (145c) se poursuivant par un alésage lisse (147c) muni d'une rainure d'accrochage (144c) et d'un épaulement (148c) servant de butée au bouchon (3c),
- le bouchon (3c) étant lisse extérieurement,
- un anneau de verrouillage (36c) logé au moins partiellement dans la gorge d'accrochage (144c) de l'ajutage (14c),
- une gorge (343c) homologue de celle du manchon (31c) pour couvrir en verrouillage, l'anneau (36c) et bloquer le bouchon (3c), ainsi qu'
- un ensemble de perçages (344c) partant de l'intérieur du manchon (31c) et débouchant dans sa gorge (343c).

13. Robinet de bouteille de gaz selon la revendication 12, **caractérisé en ce que** le manchon (31c) comporte trois perçages (344c).

14. Ensemble comprenant un robinet de bouteille de gaz selon la revendication 6 et outil de montage / démontage (4) du bouchon (3), l'outil (4) comprenant une tige (41) portant une poignée (42) à une extrémité et à son autre extrémité, une partie cylindrique circulaire (44) pour se loger dans l'entrée (320), côté avant du manchon (31), et portant des ergots (43) répartis en périphérie selon la répartition des entrées (3141) des logements (314) pour s'engager à travers ceux-ci dans les logements (314) et permettre de visser/dévisser le bouchon (3) dans le filetage (142) de l'ajutage (14).

15. Ensemble comprenant un robinet de bouteille de gaz selon la revendication 7 et un outil de montage/démontage du bouchon (3a), l'outil étant muni d'une tête de forme complémentaire à celle de l'entrée (320a) du manchon avec sa ou ses prises d'outil (314a) pour s'engager dans la ou les prises d'outil (314a) et visser/dévisser le manchon (31a) dont le filetage extérieur (311a) coopère avec le filetage intérieur (142a) de l'ajutage (14a).

16. Ensemble comprenant un robinet de bouteille de gaz selon la revendication 10, et un outil pour le montage/démontage, l'outil (7) ayant une extrémité avant filetée qui, pour le démontage, se vissant successivement dans le filetage d'entrée (347b) pour le rompre et dégager l'anneau (34b) pour ensuite se visser dans le filetage de fond (348b) et extraire le manchon (31b) et le restant du bouchon (3b).

17. Ensemble comprenant un robinet de bouteille de gaz selon la revendication 12 et un outil de démontage/remontage (8), l'outil étant muni de pions (84) guidés dans le manchon (83) de l'outil (8) pour être poussés par une came (86) dans les perçages (344c) et repousser l'anneau (36c) dans la gorge (144c) de l'ajutage (14c) pour escamoter l'anneau de verrouillage et libérer le bouchon (3c) accroché aux pions (84) pour être extrait de l'ajutage (14c).
[Note à l'imprimeur: veuillez replacer les revendications dans l'ordre selon leur présente numérotation]

18. Ensemble comprenant un robinet de bouteillede gaz selon la revendication 13 et un outil de montage/remontage (8),
**Caractérisé en ce que**
l'outil (8) a trois pions (84) commandés par une came trilobée (86) et rappelés contre la came (86) par aimantation.

## Patentansprüche

1. Gaszylinderventil, das Folgendes beinhaltet:
- einen Körper (1), der an dem Gaszylinder befestigt ist, der in Axialrichtung durch einen Kanal (112) durchquert wird, der in einem Dichtungssitz (113) endet, der in einer Kammer (13) mündet und durch ein Verschlusselement betätigt wird, das durch einen Griff manövriert wird,
- eine Auslassdüse (14), die mit der Kammer (13) in Verbindung steht und ein Klappenventil (32) aufnimmt, das sich in die Austrittsrichtung des Gases unter Wirkung des Drucks des Gases öffnet, das nach Öffnung des Kanals (112) durch das Verschlusselement (241) in die Kammer (13) gelangt,
- einen Stopfen (3) mit einem Klappenventil, der in der Auslassdüse (14) befestigt ist und aus einer Buchse gebildet ist, die das Klappenventil (32) aufnimmt,
- wobei die Buchse (31) hinter dem Klappenventil (32) einen Werkzeugeingriff (214) aufweist, um den Stopfen (3) der Auslassdüse (14) zu befestigen/zu lösen,
Gaszylinderventil, **dadurch gekennzeichnet, dass**:
- die Buchse (31) des Stopfens (3) einen Dichtungssitz (315) aufweist, gegen den das Klappenventil (32) in Anlage liegt,
- die Buchse (31) außen in Richtung des Kanals des austretenden Gases eine Auskehlung (312) mit einer Dichtungsverbindung (313), ein Gewinde (311) und einen Werkzeugeingriff (314), der nahe des Außenrandes (319) endet, aufweist,
- die Düse (14) innen in derselben Richtung des Kanals gemäß der Achse (yy) eine zylindrische Dichtungsfläche (143) auf der Seite der Kammer (13) aufweist, die die Dichtungsverbindung (313) in Anlage aufnimmt, wobei auf diese Fläche ein Gewinde (142) folgt, das das Gewinde (311) der Buchse (31) aufnimmt, und
- der Stopfen (3), der in der Auslassdüse (14) angebracht ist, mit einem Mittel zum Schutz der Befestigung der Buchse (314, 144, 33; 144a, 314a, 14b, 145b, 344-347b) ausgestattet ist, auf das aus dem Auslass der Düse (14) zugegriffen werden kann.

2. Gaszylinderventil nach Anspruch 1,
**dadurch gekennzeichnet, dass**
das in der Düse (14) verschraubte Mittel zum Schutz der Befestigung der Buchse (31) aus einem Werkzeugeingriff (314) zum Verschrauben/Losschrauben des Stopfens (3) der Auslassdüse (14) und einem Sicherheitsring (33) besteht, der den äußeren Rand (319) der Buchse (31) nach Einführung des Stopfens (3) in die Düse (14) bedeckt, wobei dieser Werkzeugeingriff in der Buchse hinter dem Klappenventil (32) ausgeführt ist, wobei dieser Werkzeugeingriff (314) vor einem äußeren Rand (319) endet, wobei eine Verankerungsauskehlung (114) in der Düse (14) für den Rand (331) eines Sicherheitsrings (33) den äußeren Rand (319) der Buchse (31) nach Einführen des Stopfens (3) in die Düse (14) abdeckt.

3. Gaszylinderventil nach Anspruch 1,
**dadurch gekennzeichnet, dass**
- die Buchse (31) innen und in der Vorne-Hinten-Richtung gemäß der Achse (yy) einen Dichtungssitz (315) enthält, der durch seine Rückführung (3151) in die Innenfläche der Buchse (31) mündet, die einen Führungsring (327) aufnimmt, der in der Buchse (31) vor dem Werkzeugeingriff (314) blockiert ist,
- das Klappenventil (32) einen Körper (321) in Form einer an der vorderen Seite durch einen Boden (22) geschlossenen Buchse aufweist, der mit einer Umfangsauskehlung (324) ausgestattet ist, die eine Dichtungsverbindung (325) zum Zusammenwirken mit dem Dichtungssitz (315) der Buchse (31) aufnimmt, wobei die Auskehlung (324) an der hinteren Seite durch einen Anschlagflansch (323) begrenzt ist und sich durch eine Führungsfläche (326) fortsetzt, die in den Führungsring (327) eingreift,
- das Klappenventil (32) an der äußeren Seite des Körpers (321) mit einer Rückstellfeder (328) ausgestattet ist, die zwischen dem Flansch (323) und dem Führungsring (327) komprimiert ist, um das Klappenventil (32) in Anlage gegen den Dichtungssitz (315) zu drücken.

4. Gaszylinderventil nach Anspruch 3,
**dadurch gekennzeichnet, dass**
der Boden (322) einen zylindrischen, runden Umfangsrand (3221) aufweist, der in den vorderen, zylindrischen, runden Eingang (3152) des Dichtungssitzes (315) eintritt, um das Klappenventil (32) in Bezug auf die Achse (yy) in der geschlossenen Position zu stabilisieren.

5. Gaszylinderventil nach Anspruch 3,
**dadurch gekennzeichnet, dass** die äußere Fläche des Körpers (321) des Klappenventils (32) einen Ansatz (329) vor der Führungsfläche (326) bildet, um die Öffnungsposition des Klappenventils (32) und das Zusammendrücken der Rückstellfeder (328) einzuschränken, wobei der Ansatz (329) durch das austretende Gas in Anlage gegen den Führungsring (327) gedrückt wird.

6. Gaszylinderventil nach Anspruch 2,
**dadurch gekennzeichnet, dass**
- der Werkzeugeingriff (314) aus Gehäusen gebildet ist, die in der Umfangsrichtung der Buchse (31) vor dem äußeren Rand (319) verlängert sind und in einem Eingang (3141) in dem Rand (319) münden, wobei die Gehäuse (314) die Wand, die zwei Umfangsende (3142, 3143) aufweist, auf beiden Seiten ihres Eingangs (3141) durchqueren.

7. Gaszylinderventil nach Anspruch 1,
**dadurch gekennzeichnet, dass**
das Mittel zum Schutz des Stopfens (3a) aus Folgenden besteht:
- einer inneren Auskehlung (144a) hinter dem Eingang der Düse (14a) und vor ihrem inneren Gewinde (142a), und
- mindestens einem Werkzeugeingriff (314a) im Eingang (320a) der Buchse (31a), die aus einem Zahn (3141a), einer Schräge (3142a) und einer Verriegelungsaussparung (3143a) gebildet ist, die in im Wesentlichen in der Axialrichtung (YY) des Stopfens ausgerichtet sind.

8. Gaszylinderventil nach Anspruch 7,
**dadurch gekennzeichnet, dass**
die Buchse (31a) mindestens zwei Werkzeugeingriffe (314a) beinhaltet, die in derselben Drehrichtung des Werkzeugs oder in die entgegengesetzte Richtung ausgerichtet sind.

9. Gaszylinderventil nach den Ansprüchen 2 und 7,
**dadurch gekennzeichnet, dass**
das Mittel zum Schutz einen Sicherheitsring (33a) zum Abdecken der Fläche des Eingangs (320a) der Buchse (31a) oder der Werkzeugeingriffe (314a) beinhaltet und dessen Rand (331a) auf nicht entfernbare Weise in der Auskehlung (144a) der Düse (14a) verankert ist.

10. Gaszylinderventil nach Anspruch 1,
**dadurch gekennzeichnet, dass**
das Mittel zum Schutz der Befestigung des Stopfens (3b) Folgendes umfasst:
- die Düse (14b) weist einen aufgeweiteten Eingang (145b) auf, der durch eine glatte Bohrung (147b) fortgesetzt ist, die mit einer Verankerungsnut (144b) und einem Ansatz (148b) ausgestattet ist, der dem Stopfen (3b) als Anschlag dient,
- der Stopfen (3b) ist außen glatt mit einem Kranz (34b), der mit einem Anschlagrand (342b) und einer durch einen hinteren Teil (344b) begrenzten Auskehlung (343b) ausgestattet ist, wobei sich die Auskehlung im an der Buchse angebrachten Zustand in einer Position im Vergleich mit der Verankerungsnut (144b) befindet,
- einen elastischen Ring (35b), der unter Spannung in der Auskehlung (343b) aufgenommen ist, wobei er sie im montierten Zustand überschreitet und verformbar ist, um zum Anbringen des Stopfens (3b) in der Düse (14b) in diese Auskehlung (343b) eingedrückt zu werden, bis sich der Ring (35b) in der Verankerungsnut (144b) entspannen kann während er ebenfalls in der Auskehlung (343b) eingegriffen bleibt,
- die Buchse (31b) weist innen ein Eingangsgewinde (347b) gefolgt von einem Bodengewinde (348b) auf, das von dem Eingangsgewinde durch eine Auskehlung (345b) in der Ebene der Auskehlung (343b) getrennt ist, um den hinteren Teil (344b) von dem Rest der Buchse (31b) zu trennen und einen Teil zu bilden, der durch Abbrechen lösbar ist, um den Ring (35b) freizugeben.

11. Gaszylinderventil nach Anspruch 10,
**dadurch gekennzeichnet, dass**
der Ring (35b) ein geteilter Ring mit einer sechseckigen Form ist, dessen Ecken (353b) natürlicherweise aus der Auskehlung (343b) der Buchse (31b) hervorstehen, um in die Verankerungsauskehlung (144b) der Düse (14b) einzudringen, wobei die Segmente (351b) zwischen den Ecken (353b) zum größten Teil in der Auskehlung (34b) der Buchse (31b) aufgenommen sind.

12. Gaszylinderventil nach Anspruch 1,
**dadurch gekennzeichnet, dass**
das Mittel zum Schutz der Befestigung des Stopfens (3c) Folgendes umfasst:
- eine Düse (14c), die einen aufgeweiteten Eingang (145c) aufweist, der durch eine glatte Bohrung (147c) fortgesetzt ist, die mit einer Verankerungsnute (144c) und einem Ansatz (148c) ausgestattet ist, der dem Stopfen (3c) als Anschlag dient,
- wobei der Stopfen (3c) außen glatt ist,
- einen Verriegelungsring (36c), der mindestens teilweise in der Verankerungsauskehlung (144c) der Düse (14c) aufgenommen ist,
- eine Auskehlung (343c), die homolog zu jener der Buchse (31c) ist, um den Ring (36c) verriegelnd abzudecken und den Stopfen (3c) zu blockieren, sowie
- eine Anordnung von Durchbohrungen (344c), die aus dem Inneren der Buche (31c) ausgehen und in seiner Auskehlung (343c) münden.

13. Gaszylinderventil nach Anspruch 12,
**dadurch gekennzeichnet, dass**
die Buchse (31c) drei Durchbohrungen (344c) beinhaltet.

14. Anordnung, die ein Gaszylinderventil nach Anspruch 6 und ein Werkzeug zur Montage/Demontage (4) des Stopfens (3) umfasst, wobei das Werkzeug (4) Folgendes umfasst:
einen Schaft (41), der einen Griff (42) an einem Ende und ein zylindrisches rundes Teil (44) an seinem anderen Ende trägt, um in dem Eingang (320) an der vorderen Seite der Buchse (31) aufgenommen zu werden, und der Vorsprünge (43) trägt, die im Umfang gemäß der Verteilung der Eingänge (3141) der Gehäuse (314) verteilt sind, um über diese in die Gehäuse (314) einzugreifen und zu ermöglichen, den Stopfen (3) in das Gewinde (142) der Düse (14) zu schrauben/loszuschrauben.

15. Anordnung, die ein Gaszylinderventil nach Anspruch 7 und ein Werkzeug zur Montage/Demontage des Stopfens (3a) umfasst, wobei das Werkzeug mit einem Kopf in einer Form ausgestattet ist, die zu jener des Eingangs (320a) der Buchse mit seiner oder seinen Werkzeugeingriffen (314a) passt, um in den oder die Werkzeugeingriffe (314a) einzugreifen und die Buchse (31a) zu einzuschrauben/loszuschrauben, deren äußeres Gewinde (311a) mit dem inneren Gewinde (142a) der Düse (14a) zusammenwirkt.

16. Anordnung, die ein Gaszylinderventil nach Anspruch 10 und ein Werkzeug zur Montage/Demontage umfasst, wobei das Werkzeug (7) ein vorderes Ende mit Gewinde aufweist, das sich zur Demontage nachfolgend in das Eingangsgewinde (347b) einschraubt, um es zu trennen und den Ring (34b) zu entfernen, um sich anschließend in das Bodengewinde (348b) einzuschrauben und die Buchse (31b) und den Rest des Stopfens (3b) zu entnehmen.

17. Anordnung, die ein Gaszylinderventil nach Anspruch 12 und ein Werkzeug zur Demontage/erneuten Montage (8) umfasst, wobei das Werkzeug mit Zapfen (84) ausgestattet ist, die in die Buchse (83) des Werkzeugs (8) geführt sind, um durch einen Nocken (86) in die Durchbohrungen (344c) gedrückt zu werden und den Ring (36c) in die Auskehlung (144c) der Düse (14c) zurückzudrängen, um den Verriegelungsring zusammenzufalten und den Stopfen (3c), der an den Zapfen (84) verankert ist, freizugeben, um aus der Düse (14c) entnommen zu werden.

18. Anordnung, die ein Gaszylinderventil nach Anspruch 13 und ein Werkzeug zur Montage/erneuten Montage (8) umfasst,
**dadurch gekennzeichnet, dass**
das Werkzeug (8) drei Zapfen (84) aufweist, die durch einen dreilappige Nocken (86) gesteuert sind und durch Magnetisierung gegen den Nocken (86) vorgespannt sind.

## Claims

1. Gas bottle valve comprising:
- a body (1) which is fixed to the gas bottle and through which there extends axially a passage (112) which terminates as a sealing seat (113) which opens in a chamber (13) and which is controlled by the closing element which is manoeuvred via a handle,
- an outlet nozzle (14) which communicates with the chamber (13) and which receives a valve which opens in the output direction of the gas under the effect of the pressure of the gas arriving in the chamber (13) after the opening of the passage (112) by the closing element (241),
- a valve type stopper (3) which is fixed in the outlet nozzle (14) and which is formed by a sleeve which receives a valve (32),
- the sleeve (31) having downstream of the valve (32) a tool socket (214) in order to fix/remove the stopper (3) in/from the outlet nozzle (14),
which gas bottle valve is **characterised in that**
- the sleeve (31) of the stopper (3) has a sealing seat (315) against which the valve (32) is supported,
- the sleeve (31) has, externally, in the passage direction of the gas being discharged, a recess (312) having a sealing joint (313), a thread (311) and a tool socket (314) which terminates upstream of the external edge (319),
- the nozzle (14) has internally in the same passage direction along the axis (yy), at the chamber side (13), a cylindrical sealing surface (143) which receives in abutment the sealing joint (313), this surface being followed by a thread (143) which receives the thread (311) of the sleeve (31), and
- the stopper (3) which is installed in the outlet nozzle (14) is provided with a protection means for the fixing of the sleeve (314, 144, 33; 144a, 314a, 14b, 145b, 344-347b) which is accessible from the outlet of the nozzle (14).

2. Gas bottle valve according to claim 1,
**characterised in that**
the protection means for the fixing of the sleeve (31) which is screwed into the nozzle (14) is constituted by a tool socket (314) in order to screw/unscrew the stopper (3) of the outlet nozzle (14) and a safety ring (33) which covers the external edge (319) of the sleeve (31) after placing the stopper (3) in the nozzle (14), the tool socket being produced in the sleeve downstream of the valve (32), this tool socket (314) terminating upstream of the external edge (319), an attachment recess (144) in the nozzle (14) for the edge (331) of a safety ring (33) covering the external edge (319) of the sleeve (31) after the stopper (3) has been positioned in the nozzle (14).

3. Gas bottle valve according to claim 1,
**characterised in that**
- the sleeve (31) comprises internally and in the upstream/downstream direction, along the axis (yy), a sealing seat (315) which connects via the return (3151) thereof the internal surface of the sleeve (31) which receives a guiding ring (327) which is blocked in the sleeve (31) upstream of the tool socket (314),
- the valve (32) has a body (321) in the form of a sleeve which is closed upstream by a base (22) which is provided with a peripheral recess (324) which receives a sealing joint (325) for cooperating with the sealing seat (315) of the sleeve (31), the recess (324) being bordered, at the downstream side, by a stop collar (323) and continuing with a guiding surface (326) which is engaged in the guiding ring (327),
- the valve (32) being provided, on the outer side of the body (321), with a return spring (328) which is compressed between the collar (323) and the guiding ring (327) in order to urge the valve (32) into abutment against the sealing seat (315) .

4. Gas bottle valve according to claim 3,
**characterised in that**
the base (322) has a cylindrical, circular peripheral edge (3221) which extends into the circular, cylindrical upstream inlet (3152) of the sealing seat (315) in order to stabilise the valve (32) relative to the axis (yy) in a closed position.

5. Gas bottle valve according to claim 3,
**characterised in that**
the outer surface of the body (321) of the valve (32) forms a shoulder (329) upstream of the guiding surface (326) in order to limit the opening position of the valve (32) and the compression of the return spring (328), the shoulder (329) moving into abutment against the guiding ring (327) which is pushed by the gas being discharged.

6. Gas bottle valve according to claim 2,
**characterised in that**
- the tool socket (314) is formed by the housings which extend in the peripheral direction of the sleeve (31) upstream of the external edge (319) and which open via an inlet (3141) in the edge (319), the housings (314) extending through the wall which has two peripheral ends (3142, 3143) at one side and the other of the inlet (3141) thereof, and.

7. Gas bottle valve according to claim 1,
**characterised in that**
the protection means for the stopper (3a) is composed of:
- an internal recess (144a) behind the nozzle inlet (14a) and in front of the internal thread (142a) thereof, and
- at least one tool socket (314a) at the inlet (320a) of the sleeve (31a) formed by a tooth (3141a), a ramp (3142a) and a locking cavity (3143a) which are orientated substantially in the axial direction (YY) of the stopper.

8. Gas bottle valve according to claim 7,
**characterised in that**
the sleeve (31a) comprises at least two tool sockets (314a) which are orientated in the same rotation direction of the tool or in the opposite direction.

9. Gas bottle valve according to claims 2 and 7,
**characterised in that**
the protection means comprises a safety ring (33a) for covering the face of the inlet (320a) of the sleeve (31a) and the tool socket(s) (314a) and whose edge (331a) is attached in a non-removable manner in the recess (144a) of the nozzle (14a) .

10. Gas bottle valve according to claim 1,
**characterised in that**
the protection means for the fixing of the stopper (3b) comprises:
- the nozzle (14b) has a flared inlet (145b) which continues as a smooth bore (147b) which is provided with an attachment groove (144b) and a shoulder (148b) which acts as a stop for the stopper (3b),
- the stopper (3b) being smooth externally with a crown (34b) which is provided with a stop edge (342b) and a recess (343b) which is delimited by a rear portion (344b), the recess being, in the installed state of the sleeve, in a position facing the attachment groove (144b),
- a resilient ring (35b) being received under tension in the recess (343b), projecting in the mounted and deformable state in order to be pressed into this recess (343b) for the installation of the stopper (3b) in the nozzle (14b) until the ring (35b) can relax in the attachment groove (144b) whilst also remaining engaged in the recess (343b),
- internally, the sleeve (31b) having an inlet thread (347b) which is followed by a base thread (348b) which is separated from the inlet thread by a recess (345b) in the plane of the recess (343b) in order to separate the rear portion (344b) from the remainder of the sleeve (31b) and to constitute a portion which can be removed by being broken in order to release the ring (35b).

11. Gas bottle valve according to claim 10,
**characterised in that**
the ring (35b) is a split ring of hexagonal form whose peaks (353b) naturally extend beyond the recess (343b) of the sleeve (31b) in order to be introduced into the attachment groove (144b) of the nozzle (14b), the segments (351b) between the peaks (353b) are largely received in the recess (34b) of the sleeve (31b).

12. Gas bottle valve according to claim 1,
**characterised in that**
the protection means for the fixing of the stopper (3c) comprising:
- a nozzle (14c) which has a flared inlet (145c) which continues as a smooth bore (147c) which is provided with an attachment groove (144c) and a shoulder (148c) which acts as a stop for the stopper (3c),
- the stopper (3c) being externally smooth,
- a locking ring (36c) which is at least partially received in the attachment groove (144c) of the nozzle (14c),
- a recess (343c) which is equivalent to that of the sleeve (31c) in order to cover the ring (36c) with locking and to block the stopper (3c), and
- an assembly of holes (344c) which extend from the interior of the sleeve (31c) and which open in the recess (343c) thereof.

13. Gas bottle valve according to claim 12,
**characterised in that**
the sleeve (31c) comprises three holes (344c).

14. Assembly comprising a gas bottle valve according to claim 2 and tool (4) for assembly/disassembly of the stopper (3), the tool (4) comprising
a rod (41) which carries a handle (42) at one end and, at the other end thereof, a cylindrical, circular portion (44) in order to be received in the inlet (320), at the front side of the sleeve (31), and which carries studs (43) which are distributed over the periphery in accordance with the distribution of the inlets (3141) of the housings (314) in order to engage through them in the housings (314) and to enable the stopper (3) to be screwed/unscrewed in the thread (142) of the nozzle (14).

15. Assembly comprising a gas bottle valve according to claim 7 and a tool for assembly/disassembly of the stopper (3a), the tool being provided with a head with a shape which complements that of the inlet (320a) of the sleeve with the tool socket(s) (314a) thereof in order to be engaged in the tool socket(s) (314a) and to screw/unscrew the sleeve (31a) whose external thread (311a) cooperates with the internal thread (142a) of the nozzle (14a).

16. Assembly comprising a gas bottle valve according to claim 10, and a tool for assembly/disassembly, the tool (7) having a threaded front end which, for disassembly, is screwed successively into the inlet thread (347b) in order to break and disengage the ring (34b) in order to subsequently be screwed into the base thread (348b) and to remove the sleeve (31b) and the remainder of the stopper (3b).

17. Assembly comprising a gas bottle valve according to claim 12 and a tool (8) for assembly/disassembly,
the tool being provided with pins (84) which are guided in the sleeve (83) of the tool (8) in order to be pushed by a cam (86) into the holes (344c) and to push the ring (36c) back into the recess (144c) of the nozzle (14c) in order to retract the locking ring and to release the stopper (3c) which is attached to the pins (84) in order to be removed from the nozzle (14c).

18. Assembly comprising a gas bottle valve according to claim 13 and a tool (8) for assembly/disassembly,
**characterised in that**
the tool (8) has three pins (84) which are controlled by a triple-lobed cam (86) and which are returned against the cam (86) by means of magnetisation.
